# EUROPEAN PATENT SPECIFICATION

(11) **EP 3 093 702 B1**
(45) Date of publication and mention of the grant of the patent: **01.11.2017**
(21) Application number: 16168554.0
(22) Date of filing: 06.05.2016
(51) Int. Cl.: G02C 5/22, G02C 5/14, G02C 5/10

(54) **HINGE FOR ARTICULATING A TEMPLE TO A FRONT OF A FRAME FOR EYEGLASSES**
SCHARNIER ZUR GELENKIGEN VERBINDUNG EINES BÜGELS AN DIE VORDERSEITE EINES BRILLENGESTELLS
CHARNIÈRE POUR ARTICULER UNE BRANCHE À L'AVANT D'UNE MONTURE DE LUNETTES

(30) Priority: 15.05.2015 IT PD20150099
(43) Date of publication of application: 16.11.2016
(73) Proprietor: Silcon Plastic S.r.l., 32012 Val Di Zoldo (BO) (IT)
(72) Inventor: COSTANTIN, Arcangelo, 32012 Forno di Zoldo (BL) (IT); BATTISTIN, Pietro, 32012 Forno di Zoldo, Frazione Dont (BL) (IT)
(74) Representative: Modiano, Micaela Nadia

(56) References cited:
- EP-A1- 1 184 709
- EP-A1- 2 390 710
- WO-A1-2009/062381
- FR-A1- 2 997 769
- JP-A- 2003 156 717
- US-A- 2 098 921
- US-B1- 6 883 914

## Description

The present invention relates to a hinge for articulating a temple to a front of a frame for eyeglasses.

Nowadays the problem continues to be felt, in the eyewear sector, of having eyeglasses whose temples retain the configuration set by the user, for example the temple rotated away from the front in the configuration for use, or the temple rotated against the front in the closed configuration of the eyeglass frame for its placing in a protective container.

In fact nowadays most of the systems for stabilizing the configuration of a temple with respect to the front to which it is hinged are hinges called "flex-hinges", which are adapted to articulate the temples to the fronts or to the end pieces of frames of eyeglasses.

Such hinges are structured so that the two hinge elements that form them, when in use, substantially have two stable relative angles, one with the arm closed and one with the arm splayed with respect to the front/end piece of the frame that has them, and they are furthermore capable of permitting an elastic overtravel in the rotation to splay the arm with respect to the front/end piece.

To this end, a first hinge element comprises a small casing, a slider that can slide in the casing and one or more springs accommodated in the casing so as to elastically oppose the extension therefrom of the slider.

The slider usually incorporates the male hinge part, which juts out externally from the casing, and the second hinge element incorporates the female hinge part, pivoted to the male hinge part.

Furthermore a cam device is provided which defines two relative configurations of the hinge elements in which the springs support the minimum operating traction.

Such hinges reveal a complexity, and therefore a cost, both in terms of components and in terms of assembly, which can significantly influence the final cost of the eyeglass frame.

Furthermore, such flex-hinges do not make it possible for the temples to remain in an intermediate position that the user may want, since the cam device is adapted to enable the temple to remain in one of the two preset configurations.

The aim of the present invention is to devise a hinge for articulating a temple to a front of a frame for eyeglasses, which is capable of overcoming the above mentioned drawbacks of the most widespread hinges for conventional eyeglasses.

Within this aim, an object of the invention is to devise a hinge that is simpler and more inexpensive to provide.

Another object of the invention is to devise a hinge that is made up of few parts and is easier and quicker to assemble.

Another object of the invention is to devise a hinge that is able to stabilize a position of the temple in any one of the possible angular configurations that the user chooses between the two limit configurations.

Relevant documents within the technical context of the present invention are the following ones: FR2997769A1, WO2009062381A1, EP1184709A1, EP2390710A1 and JP2003156717A.

This aim and these and other objects which will become better apparent hereinafter are achieved by a hinge for articulating a temple to a front of a frame for eyeglasses according to claim 1. Further characteristics and advantages of the invention will become better apparent from the description of two preferred, but not exclusive, embodiments of the hinge according to the invention, which are illustrated for the purposes of non-limiting example in the accompanying drawings wherein:

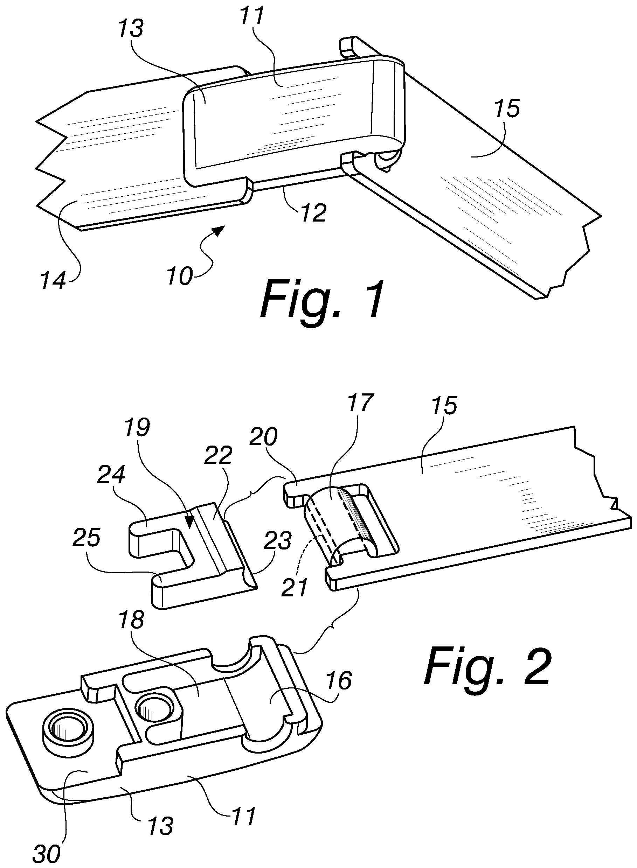

Figure 1 is a perspective view of a hinge according to the invention, in a first embodiment thereof;
Figure 2 is a partially exploded perspective view of the hinge in Figure 1;
Figure 3 is a perspective view of the hinge in Figures 1 and 2, partially assembled;
Figure 4 is a perspective view like Figure 3, but fully assembled;
Figure 5 is a partially exploded perspective view of a second embodiment of the invention.

With reference to the figures, a hinge for articulating a temple to a front of a frame for eyeglasses, in a first embodiment thereof according to the invention, is generally designated with the reference numeral 10.

Such hinge 10 comprises two half-shells 11 and 12, which are closed onto each other and which comprise in turn:
- a fixing portion 13 for engaging, at an end part, one of either an eyeglass front 14 or a temple 15, for example an end of a front 14,
- a first seat 16, defined inside the two half-shells 11 and 12 closed onto each other, for a pivoting body 17 which is integral with the other one of either the front 14 or the temple 15, in this example the temple 15,
- a second seat 18, contiguous to the first seat 16, to accommodate an element 19 for contrasting the rotation of the pivoting body 17.

In the first embodiment of the invention, shown in Figures from 1 to 4 and described by way of non-limiting example of the invention, the pivoting body 17 is constituted by a substantially cylindrical body carried at the pivoting end 20 of the temple 15.

For example, such pivoting body 17 is constituted by a cylindrical cover arranged so as to cover a supporting crossmember 21 shaped at the pivoting end 20 of the temple 15.

Such pivoting body 17 is provided by overmolding plastic material on a supporting crossmember 21 which is contoured at the pivoting end 20 of the temple 15.

The rotation contrasting element 19 is constituted by a brake pad that comprises a main body 22 provided with a braking face 23, which is shaped like an arc of a cylindrical surface and is intended to press against the pivoting body 17, and two tabs 24 and 25, for stable arrangement inside the complementarily shaped corresponding seat 18.

Such brake pad is advantageously made of a material adapted to develop a certain friction upon contact with the outer surface of the pivoting body 17.

Such brake pad is made for example of elastomer, in particular an elastomer that is resistant to galvanic treatments.

An end of the front 14 which is intended for engagement with the half-shells 11 and 12 is called a "locking end" and is designated with the reference numeral 26.

In such first embodiment of the invention, the fixing portion 13 is constituted by a third seat 30, which is complementarily shaped with respect to the locking end 26 and defined between the two half-shells 11 and 12.

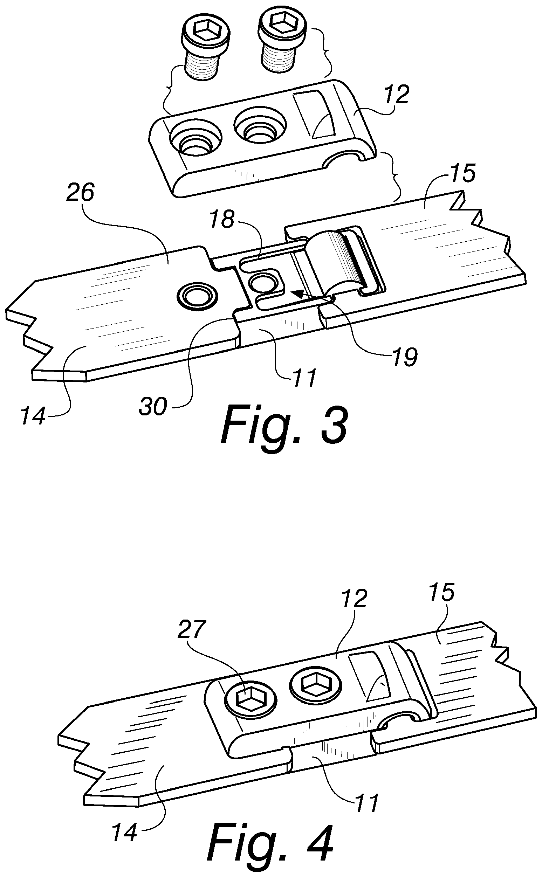

As shown in Figure 3, once the locking end 26 of the front 14 is positioned in the third seat 30, the rotation contrasting element 19 is positioned in its corresponding second seat 18, and the pivoting body 17 is inserted in its corresponding first seat 16, for rotation, the second half-shell 12 is closed onto the first half-shell 11, locking the two half-shells 11 and 12 to each other by way of one or more screws 27, as shown in Figure 4.

Use of the hinge 10 according to the invention is as follows.

By rotating the temple 15 the pivoting body 17 rubs against the braking face 23 of the brake pad, and in any position the user leaves the temple 15, the latter is held in such position by the friction between the outer surface of the pivoting body 17 and the surface of the braking face 23.

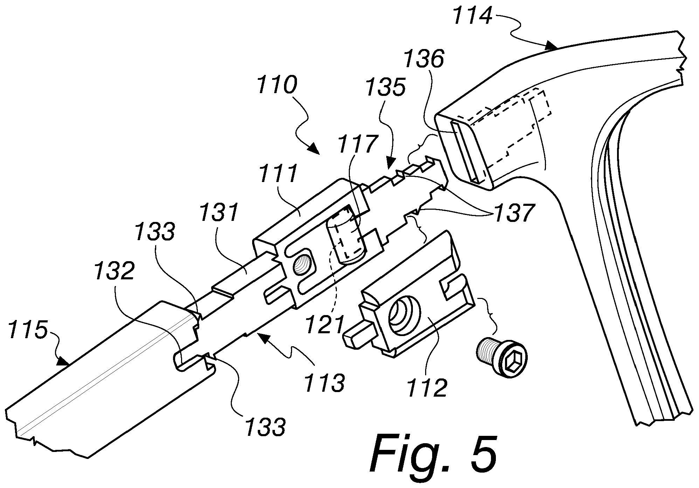

Figure 5 shows a second embodiment of the hinge according to the invention, which is generally designated therein with the reference numeral 110.

In such second embodiment the fixing portion 113 for engaging, at an end part, one of either an eyeglass front 114 or a temple 115 is constituted by a contoured shank 131, which extends from one of the two half-shells 111 and 112, or partially from both, and is intended for insertion in a corresponding complementarily shaped seat 132 which is defined in the end portion either of the eyeglasses front 114 or of the temple 115, and for example of the temple 115.

In the present embodiment, the contoured shank 131 extends from a first half-shell 111.

The contoured shank 131 is provided with at least one extraction-preventing tooth 133, for example two mutually opposite extraction-preventing teeth 133, which are adapted to prevent the extraction of the contoured shank 131 from its seat 132.

In such second embodiment, the pivoting body 117 is integral with the other one of either the front 114 or the temple 115, i.e. with the front 114, by way of a coupling element 135 which is adapted to be inserted in a corresponding complementarily shaped seat 136 defined on the front 114.

Such pivoting body 117 is provided by overmolding plastic material on a supporting crossmember 121 which is part of the coupling element 135.

The coupling element 135 is provided with at least one extraction-preventing tooth 137, for example two mutually opposite extraction-preventing teeth 137, which are adapted to prevent the extraction of the coupling element 135 from its seat 136.

In practice it has been found that the invention fully achieves the intended aim and objects.

In particular, with the invention a hinge has been devised which is simpler and more inexpensive to provide compared to conventional "flex" hinges.

Furthermore, with the invention a hinge has been devised which is made up of few parts and is easier and quicker to assemble.

Moreover, with the invention a hinge has been devised which is able to stabilize a position of the temple in any one of the possible angular configurations that the user chooses between the two limit configurations.

The invention, thus conceived, is susceptible of numerous modifications and variations, all of which are within the scope of the appended claims. Moreover, all the details may be substituted by other, technically equivalent elements.

In practice the components and the materials employed, provided they are compatible with the specific use, and the contingent dimensions and shapes, may be any according to requirements and to the state of the art. This application claims priority from the Italian patent application no. PD2015A000099 (IO2015902352326). Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A hinge (10) for articulating a temple to a front of a frame for eyeglasses, the hinge comprising two half-shells (11, 12) which are closed onto each other and which comprise:
- a fixing portion (13) for engaging, at an end part, one of either an eyeglass front (14) or a temple (15),
**characterized in that** the half-shells further comprise
- a first seat (16), defined inside said two half-shells (11, 12) closed onto each other, for a pivoting body (17) which is integral with the other one of either said front (14) or said temple (15),
- a second seat (18), contiguous to said first seat (16), to accommodate an element in the form of a braking pad (19) for contrasting the rotation of said pivoting body (17).

2. The hinge according to claim 1, **characterized in that** said pivoting body (17) is constituted by a substantially cylindrical body carried at a pivoting end (20) of the temple (15).

3. The hinge according to one or more of the preceding claims, **characterized in that** said pivoting body (17) is constituted by a cylindrical cover arranged so as to cover a supporting crossmember (21) shaped at the pivoting end (20) of the temple (15).

4. The hinge according to claim 3, **characterized in that** said pivoting body (17) is provided by overmolding plastic material on a supporting crossmember (21) which is contoured at the pivoting end (20) of the temple (15).

5. The hinge according to one or more of the preceding claims, **characterized in that** said rotation contrasting element (19) is constituted by a brake pad that comprises a main body (22) provided with a braking face (23), which is shaped like an arc of a cylindrical surface and is intended to press against the pivoting body (17), and two tabs (24, 25) for stable arrangement inside the complementarily shaped corresponding seat (18).

6. The hinge according to one or more of the preceding claims, **characterized in that** said brake pad is made of a material that is adapted to generate friction when in contact with the outer surface of the pivoting body (17).

7. The hinge according to one or more of the preceding claims, **characterized in that** said brake pad is made of elastomer.

8. The hinge according to one or more of the preceding claims, **characterized in that** the fixing portion (113) for engaging, at an end part, one of either an eyeglass front (114) or a temple (115) is constituted by a contoured shank (131), which extends from one of the two half-shells (111, 112), or partially from both, and is intended for insertion in a corresponding complementarily shaped seat (132) which is defined in the end portion either of said eyeglasses front (114) or of said temple (115).

9. The hinge according to claim 8, **characterized in that** said contoured shank (131) has at least one extraction-preventing tooth (133) which is adapted to prevent the extraction of the contoured shank (131) from its seat (132).

10. The hinge according to one or more of claims 8 and 9, **characterized in that** said pivoting body (117) is integral with the other one of either said front (114) or said temple (115) by way of a coupling element (135) which is adapted to be inserted in a corresponding complementarily shaped seat (136) which is defined on the front (114), said pivoting body (117) being provided by overmolding plastic material on a supporting crossmember (121) which is part of said coupling element (135).

11. The hinge according to one or more of claims 8 to 10, **characterized in that** said coupling element (135) has at least one extraction-preventing tooth (137) which is adapted to prevent the extraction of the coupling element (135) from its seat (136).

## Patentansprüche

1. Ein Scharnier (10) zur gelenkigen Verbindung eines Bügels mit einer Vorderseite eines Brillengestells, wobei das Scharnier zwei Halbschalen (11, 12) umfasst, die zueinander geschlossen sind und Folgendes umfassen:
- einen Befestigungsabschnitt (13) zum Eingreifen, an einem Endstück, entweder in die Vorderseite (14) einer Brille oder einen Bügel (15),
**dadurch gekennzeichnet, dass** die Halbschalen weiter Folgendes umfassen:
- einen ersten Sitz (16), bestimmt innerhalb der zwei zueinander geschlossenen Halbschalen (11, 12), für einen schwenkbaren Körper (17), welcher mit dem anderen entweder der Vorderseite (14) oder des Bügels (15) integral ist,
- einen zweiten Sitz (18), benachbart zu dem ersten Sitz (16), zur Aufnahme eines Elements in Form eines Bremsklotzes (19), um der Drehung des schwenkbaren Körpers (17) entgegenzuwirken.

2. Das Scharnier gemäß Anspruch 1, **dadurch gekennzeichnet, dass** der schwenkbare Körper (17) aus einem im Wesentlichen zylindrischen Körper besteht, der von einem schwenkbaren Ende (20) des Bügels (15) getragen wird.

3. Das Scharnier gemäß einem oder mehreren der obigen Ansprüche, **dadurch gekennzeichnet, dass** der schwenkbare Körper (17) aus einer zylindrischen Abdeckung besteht, die so angeordnet ist, dass sie einen tragenden Querträger (21) bedeckt, welcher am schwenkbaren Ende (20) des Bügels (15) geformt ist.

4. Das Scharnier gemäß Anspruch 3, **dadurch gekennzeichnet, dass** der schwenkbare Körper (17) hergestellt wird durch Überspritzen von Kunststoffmaterial auf einen tragenden Querträger (21), der am schwenkbaren Ende (20) des Bügels (15) geformt ist.

5. Das Scharnier gemäß einem oder mehreren der obigen Ansprüche, **dadurch gekennzeichnet, dass** das der Drehung entgegenwirkende Element (19) in einem Bremsklotz besteht, der einen Hauptkörper (22) umfasst, versehen mit einer Bremsfläche (23), die wie eine Wölbung einer zylindrischen Oberfläche geformt und dazu bestimmt ist, gegen den schwenkbaren Körper (17) zu drücken, und zwei Nasen (24, 25) zur festen Positionierung in dem komplementär geformten entsprechenden Sitz (18).

6. Das Scharnier gemäß einem oder mehreren der obigen Ansprüche, **dadurch gekennzeichnet, dass** der Bremsklotz aus einem Material besteht, das ausgebildet ist, um Reibung zu erzeugen, wenn es in Kontakt mit der Außenfläche des schwenkbaren Körpers (17) steht.

7. Das Scharnier gemäß einem oder mehreren der obigen Ansprüche, **dadurch gekennzeichnet, dass** der Bremsklotz aus Elastomer besteht.

8. Das Scharnier gemäß einem oder mehreren der obigen Ansprüche, **dadurch gekennzeichnet, dass** der Befestigungsabschnitt (113) zum Eingreifen, an einem Endstück, in entweder eine Vorderseite (114) einer Brille oder einen Bügel (115) aus einem konturierten Schaft (131) besteht, der sich von einer der beiden Halbschalen (111, 112) oder teilweise von beiden erstreckt und zum Einführen in einen entsprechenden komplementär geformten Sitz (132) bestimmt ist, welcher im Endabschnitt entweder der Vorderseite (114) der Brille oder des Bügels (115) bestimmt ist.

9. Das Scharnier gemäß Anspruch 8, **dadurch gekennzeichnet, dass** der konturierte Schaft (131) mindestens einen die Extraktion verhindernden Zahn (133) hat, der ausgebildet ist, um die Extraktion des konturierten Schafts (131) aus seinem Sitz (132) zu verhindern.

10. Das Scharnier gemäß einem oder mehreren der Ansprüche 8 und 9, **dadurch gekennzeichnet, dass** der schwenkbare Körper (117) integral mit dem anderen entweder der Vorderseite (114) oder des Bügels (115) ist über ein Kopplungselement (135), das ausgebildet ist, um in einen entsprechenden komplementär geformten Sitz (136) eingesetzt zu werden, der an der Vorderseite (114) bestimmt ist, wobei der schwenkbare Körper (117) hergestellt wird durch Überspritzen von Kunststoffmaterial auf einen tragenden Querträger (121), der Teil des Kopplungselements (135) ist.

11. Das Scharnier gemäß einem oder mehreren der Ansprüche 8 bis 10, **dadurch gekennzeichnet, dass** das Kopplungselement (135) mindestens einen die Extraktion verhindernden Zahn (137) hat, der ausgebildet ist, um die Extraktion des Kopplungselements (135) aus seinem Sitz (136) zu verhindern.

## Revendications

1. Charnière (10) pour articuler une branche à un avant d'une monture de lunettes, l'articulation comprenant deux demi-coques (11, 12) qui sont fermées l'une sur l'autre et qui comprennent ;
une partie de fixation (13) pour venir en prise, en une partie d'extrémité, avec l'un d'un avant de lunettes (14) ou d'une branche (15), **caractérisée en ce que** les demi-coques comprennent en outre
un premier siège (16), défini à l'intérieur desdites deux demi-coques (11, 12) fermées l'une sur l'autre, pour un corps pivotant (17) qui est d'un seul bloc avec l'autre dudit avant (14) ou de ladite branche (15),
un second siège (18), contigu audit premier siège (16), pour accueillir un élément sous la forme d'un patin de freinage (19) pour gêner la rotation dudit corps pivotant (17).

2. Charnière selon la revendication 1, **caractérisée en ce que** ledit corps pivotant (17) est constitué par un corps sensiblement cylindrique supporté en une extrémité pivotante (20) de la branche (15).

3. Charnière selon une ou plusieurs des revendications précédentes, **caractérisée en ce que** ledit corps pivotant (17) est constitué par un élément cylindrique agencé de façon à couvrir un élément de support transversal (21) formé au niveau de l'extrémité pivotante (20) de la branche (15).

4. Charnière selon la revendication 3, **caractérisée en ce que** ledit corps pivotant (17) est fourni par surmoulage de matière plastique sur un élément de support transversal (21) qui est formé à l'extrémité pivotante (20) de la branche (15).

5. Charnière selon une ou plusieurs des revendications précédentes, **caractérisée en ce que** ledit élément gênant la rotation (19) est constitué par un patin de frein qui comprend un corps principal (22) pourvu d'une face de freinage (23), qui est formée comme un arc d'une surface cylindrique et est destiné à presser contre le corps pivotant (17), et deux patins (24, 25) pour un agencement stable à l'intérieur du siège (18) correspondant formé complémentairement.

6. Charnière selon une ou plusieurs des revendications précédentes, **caractérisée en ce que** ledit patin de frein est fait d'un matériau qui est adapté pour générer un frottement quand il est en contact avec la surface extérieure du corps pivotant (17).

7. Charnière selon une ou plusieurs des revendications précédentes, **caractérisée en ce que** ledit patin de frein est fait d'élastomère.

8. Charnière selon une ou plusieurs des revendications précédentes, **caractérisée en ce que** la partie de fixation (113) pour venir en prise, en une partie d'extrémité avec l'un d'un avant de lunettes (114) ou d'une branche (115) est constituée par une tige formée (131), qui s'étend depuis une des deux demi-coques (111, 112), ou partiellement depuis les deux, et est destinée à l'insertion dans un siège (132) correspondant formé complémentairement qui est défini dans la partie d'extrémité dudit avant des lunettes (114) ou de ladite branche (115).

9. Charnière selon la revendication 8, **caractérisée en ce que** ladite tige formée (131) comporte au moins une dent empêchant l'extraction (133) qui est adaptée pour empêcher l'extraction de la tige formée (131) de son siège (132).

10. Charnière selon une ou plusieurs des revendications 8 et 9, **caractérisée en ce que** ledit corps pivotant (117) est d'un seul bloc avec l'autre dudit avant (114) ou de ladite branche (115) au moyen d'un élément de couplage (135) qui est adapté pour être inséré dans un siège (136) correspondant formé complémentairement qui est défini sur l'avant (114), ledit corps pivotant (117) étant fourni par surmoulage de matière plastique sur un élément de support transversal (121) qui fait partie dudit élément de couplage (135).

11. Charnière selon une ou plusieurs des revendications 8 à 10, **caractérisée en ce que** ledit élément de couplage (135) comporte au moins une dent anti-extraction (137) qui est adaptée pour empêcher l'extraction de l'élément de couplage (135) de son siège (136).
